(19) Europäisches Patentamt
European Patent Office
Office européen des brevets

(11) Veröffentlichungsnummer : **0 075 822**
**B1**

(12) # EUROPÄISCHE PATENTSCHRIFT

(45) Veröffentlichungstag der Patentschrift : **24.04.85**

(51) Int. Cl.[4] : **C 08 G 12/30**, C 08 G 12/42, C 09 D 3/50

(21) Anmeldenummer : **82108650.1**

(22) Anmeldetag : **18.09.82**

(54) **Verfahren zur Herstellung von Aminoplastharzen und deren Verwendung.**

(30) Priorität : **28.09.81 DE 3138548**

(43) Veröffentlichungstag der Anmeldung : **06.04.83 Patentblatt 83/14**

(45) Bekanntmachung des Hinweises auf die Patenterteilung : **24.04.85 Patentblatt 85/17**

(84) Benannte Vertragsstaaten : **AT BE CH DE FR GB LI NL SE**

(56) Entgegenhaltungen : **DE-A- 3 025 352**

(73) Patentinhaber : **BASF Aktiengesellschaft**
**Carl-Bosch-Strasse 38**
**D-6700 Ludwigshafen (DE)**

(72) Erfinder : **Hummerich, Rainer, Dr.**
**Budapester Strasse 47**
**D-6700 Ludwigshafen (DE)**
Erfinder : **Hahn, Herbert, Dr.**
**Ungsteiner Strasse 41**
**D-6700 Ludwigshafen (DE)**
Erfinder : **Weiss, Wolfram, Dr.**
**Am Speyerweg 40**
**D-6704 Mutterstadt (DE)**
Erfinder : **Immel, Guenther, Dr.**
**Mozartstrasse 28**
**D-6940 Weinheim (DE)**
Erfinder : **Krause, Hans-Joachim, Dr.**
**Pariser Strasse 31**
**D-6700 Ludwigshafen (DE)**
Erfinder : **Peters, Karl-Clemens, Dr.**
**Otto-Schmidt-Gross-Strasse 4**
**D-6702 Bad Duerkheim (DE)**

**EP 0 075 822 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zur Herstellung von Aminoplastharzen auf Basis von Umsetzungsprodukten aus Aminotriazinen und Aldehyden und die Verwendung dieser Aminoplastharze als Lackrohstoffe.

Es ist bekannt, daß man reine Umsetzungsprodukte aus Melamin bzw. Aminotriazinen mit Aldehyden erhalten kann. In der Praxis haben sich im wesentlichen nur die Umsetzungsprodukte von Melamin und Formaldehyd durchgesetzt, die u. a. als wäßrige Harzlösung (Tränk-Leim-Harze) oder als Pulver bei der Herstellung von Preßmassen verwendet werden. Weitere Anwendungen scheiterten bislang am Lösungsverhalten der Produkte. Die Verwendung anderer Aldehyde als Formaldehyd ist wenig gebräuchlich und gelang bisher nur, wenn die Umsetzungen in Gegenwart von Alkoholen unter Bildung von Alkoxialkylgruppen durchgeführt wurden.

In der DE-AS 12 18 456 wird ein Verfahren beschrieben, bei dem durch Umsetzung von Melamin mit Butyraldehyd und einem niedrigen ($C < 6$) aliphatischen Alkohol unter Zusatz größerer Mengen Wasser Bisbutylolmelaminether entstehen. Nachteile hierbei sind extrem lange Reaktionszeiten und die notwendige dauernde mechanische Erneuerung der Oberfläche der Melaminteilchen durch Arbeiten in einer Kugelmühle.

Nach DE-OS 21 05 783 und DE-OS 27 37 984 liefert die Reaktion von Aminotriazinen, Aldehyden mit mindestens 2 C-Atomen und niedrigen Alkoholen Bis- oder Trisalkylolaminotriazinether in hoher Ausbeute in einem einstufigen Verfahren. Die erhaltenen Tris-ether sollen « in den gebräuchlichen organischen Lösungsmitteln wie Alkoholen, Estern und chlorierten Kohlenwasserstoffen gut löslich » sein. Wie anhand von Vergleichsbeispielen gezeigt wird, liefert dieses Verfahren jedoch ausschließlich Produkte, welche nur in Ethylenglykol bedingt löslich (1 Teil auf ca. 10 Teile Solvens), in allen anderen Lacklösungsmitteln jedoch schwer löslich sind. Da zudem die Verträglichkeit mit anderen Bindemitteln (Alkyd-, Acrylatharz) fehlt, lassen sich diese Kondensate nicht als Lackrohstoffe verwenden.

Weiter sind Alkoxialkylaminotriazine lange bekannt, z. B. Hexamethoximethylmelamin und Tetramethoximethylbenzoguanamin. Das Erstere erhält man durch Reaktion von 1 Mol Melamin mit 6 Mol Formaldehyd und anschließende vollständige Veretherung mit einem Überschuß Methanol zum Hexamethoximethylderivat. Verbindungen dieses Typs werden als Lackharze verwendet und können mit einer Vielzahl Hydroxyl-, Carboxyl- und Amidgruppen-haltiger Polymerer vernetzt werden.

Umsetzungsprodukte von Alkoxiaminotriazinen mit β-Hydroxialdehyden werden in der DE-A 30 25 352 vorgeschlagen. Sonst gibt es in der Literatur keine Hinweise auf die Herstellung und Verwendung von veretherten β-Hydroxiaminotriazinderivaten, welche aus Aminotriazinen, β-Hydroxialdehyden und Alkoholen erhalten werden.

Aufgabe der vorliegenden Erfindung ist es, ein Verfahren zur Herstellung von veretherten oder nichtveretherten Aminoplastharzen auf Basis von Umsetzungsprodukten aus Aminotriazinen und Aldehyden aufzuzeigen, das besonders vorteilhaft durchführbar ist und, insbesondere im Falle der veretherten Umsetzungsprodukte, zu Produkten führt, die die oben angeführten Nachteile der bekannten Produkte nicht aufweisen, so daß sie sich als Lackrohstoffe vorteilhaft verwenden lassen.

Gegenstand der vorliegenden Erfindung ist ein Verfahren zur Herstellung von veretherten oder nichtveretherten Aminoplastharzen auf Basis von Umsetzungsprodukten aus Aminotriazinen und Aldehyden, das dadurch gekennzeichnet ist, daß Aminotriazine der allgemeinen Formel (I)

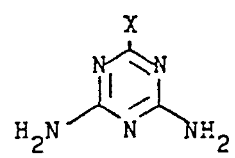

(I)

worin X für Wasserstoff, einen Alkylrest mit 1 bis 15 Kohlenstoffatomen, einen Phenylrest, einen Alkylphenylrest mit 1 bis 4 Kohlenstoffatomen im Alkylrest oder für den Rest $—NH_2$ steht, mit 0,1 bis 3 Mol pro Mol acidem Wasserstoff des Aminotriazins eines β-Hydroxialdehydes der allgemeinen Formel (II)

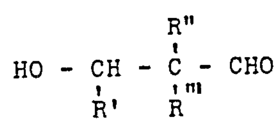

(II)

worin R′, R″ und R‴ untereinander gleich oder verschieden sind und für Wasserstoff oder eine Alkylgruppe mit 1 bis 5 Kohlenstoffatomen stehen oder R″ bzw. R‴ zusammen mit dem α-Kohlenstoffatom einen Cyclopentan- oder Cyclohexanring bilden sowie R″ und/oder R‴ außerdem für einen Hydroxialkylrest mit 1 bis 4 Kohlenstoffatomen und R″ für einen Phenylrest stehen können, bei Temperaturen zwischen 60 und 200 °C umgesetzt werden und das dabei entstehende Wasser gegebenenfalls zumindest teilweise entfernt wird, wobei im Falle der Herstellung der veretherten Aminoplastharze die Umsetzung in Gegenwart mindestens eines Alkohols und eines sauren Katalysators, im Falle der Herstellung der nichtveretherten Aminoplastharze die Umsetzung in Gegenwart oder Abwesenheit eines sauren Katalysators durchgeführt wird.

Zur Herstellung der veretherten Aminoplastharze wird als Alkohol ein Mono- und/oder Polyalkohol in einer Menge von 0,1 bis 30 Mol, bezogen auf 1 Mol des Aminotriazins verwendet.

Gegenstand der vorliegenden Erfindung ist außerdem die Verwendung der erfindungsgemäß hergestellten Aminoplastharze als Lackrohstoffe.

Zu den Aufbaukomponenten und zum erfindungsgemäßen Herstellverfahren ist im einzelnen folgendes auszuführen.

Als Aminotriazine der allgemeinen Formel (I)

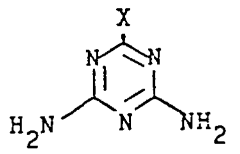

(I)

worin X für Wasserstoff, einen Alkylrest mit 1 bis 15 Kohlenstoffatomen, einen Phenylrest, einen Alkylphenylrest mit 1 bis 4 Kohlenstoffatomen im Alkylrest oder für den Rest —$NH_2$ steht, kommen beispielsweise in Frage 2,4,6-Triamino-1,3,5-triazin (= Melamin), Guanamin, Benzoguanamin oder Acetoguanamin. Bevorzugte Aminotriazine sind Melamin und Benzoguanamin.

Als β-Hydroxyaldehyde der Formel (II)

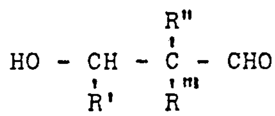

(II)

worin R′, R″ und R‴ untereinander gleich oder verschieden sind und für Wasserstoff oder eine Alkylgruppe mit 1 bis 5 Kohlenstoffatomen stehen oder R″ bzw. R‴ zusammen mit dem α-Kohlenstoffatom einen Cyclopentan- oder Cyclohexanring bilden sowie R″ und/oder R‴ außerdem für einen Hydroxialkylrest mit 1 bis 4 Kohlenstoffatomen und R‴ für einen Phenylrest stehen können, eignen sich beispielsweise Aldoladditionsprodukte, die gemäß folgendem Reaktionsschema erhältlich sind :

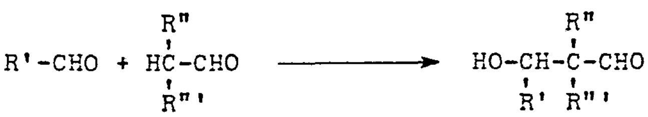

Zur Herstellung dieser Aldoladditionsprodukte sind beispielsweise folgende Aldehyde verwendbar :

Formaldehyd, Acetaldehyd, Propanal, n-Butanal, n-Pentanal, n-Hexanal, n-Heptanal, 2-Methylpropanal, 2-Methylbutanal, 2-Methylpentanal, 2-Ethylbutanal, 2-Ethylhexanal, 3-Methylbutanal, Cyclopentylcarboxaldehyd, Cyclohexyl-carboxaldehyd.

Derart erhältliche β-Hydroxialdehyde sind z. B. 3-Hydroxibutanal, 3-Hydroxi-2-methyl-propanal, 3-Hydroxi-2-methyl-butanal, 3-Hydroxi-2-pentanal, 3-Hydroxi-2-methyl-hexanal, 3-Hydroxi-2-methyl-heptanal, 3-Hydroxi-2-ethyl-pentanal, 3-Hydroxi-2-ethyl-hexanal ; insbesondere die Umsetzungsprodukte von iso- und n-Alkanalen bzw. Cycloalkylcarboxaldehyden mit Formaldehyden, z. B. 2.2-Dimethyl-3-hydroxipropanal, 2-Methyl-2-ethyl-3-hydroxi-propanal, 2-Methyl-2-propyl-3-hydroxi-propanal, 2-Ethyl-2-butyl-3-hydroxipropanal, 2.2-Dimethylolpropanal, 2.2-Dimethylolbutanal, 2.2-Dimethylol-pentanal, 2.2-Dimethylol-3-hydroxi-propanal, 1-Methylol-cyclopentyl-carboxaldehyd, 1-Methylol-cyclohexyl-carboxaldehyd. Verfahren zur Herstellung dieser Produkte sind u. a. beschrieben in DE-AS 17 93 512, DE-OS 19 57 301 und DE-OS 25 07 461. Bevorzugt wird z. B. 2.2-Dimethyl-3-hydroxipropanal (« Hydroxipivalinaldehyd », R′ = H, R″ = R‴ = $CH_3$).

Erfindungsgemäß werden pro Mol aciden Wasserstoff im Aminotriazin 0,1 bis 3 Mol, vorzugsweise 0,5 bis 2 Mol des Hydroxialdehyds eingesetzt.

Diese Umsetzung kann im Falle der Herstellung nichtveretherter Aminoplastharze ohne Zusatz von Katalysatoren und/oder Lösungsmitteln oder in Gegenwart von sauren Katalysatoren, wie anorganische, organische Säuren, wie z. B. HCl, $H_2SO_4$, $H_3PO_4$, $HNO_3$, p-Toluolsulfonsäure, Oxalsäure, Maleinsäure, Maleinsäureanhydrid oder sauren Ionenaustauscher und/oder in Gegenwart von Lösungsmitteln, wie aliphatischen oder cycloaliphatischen Kohlenwasserstoffen, wie n-Alkane, Cyclohexan, aromatischen Kohlenwasserstoffen, wie Toluol, Xylol in einem Temperaturbereich von 60 bis 200 °C, vorzugsweise 80 bis 150 °C, bei Normaldruck oder vermindertem Druck, vorzugsweise bei 600 bis 60 mbar durchgeführt werden.

Als Alkohole zur erfindungsgemäßen Herstellung veretherter Aminoplastharze eignen sich Mono- und/oder Polyalkohole, beispielsweise Monoalkohole mit 1 bis 6 Kohlenstoffatomen wie Methanol,

Ethanol, n-Propanol, iso-Propanol, n-Butanol, iso-Butanol, Hexanol, Cyclohexanol und mehrwertige Alkohole wie Ethylenglykol, Propylenglykol, Butandiol und Glycerin, sowie Gemische der genannten Alkohole. Bevorzugt sind Methanol und Butanol.

Die Alkohole werden in Mengen von 0,1 bis 30, vorzugsweise 3 bis 15 Mol, bezogen auf 1 Mol Aminotriazin eingesetzt. Überschüssiger Alkohol kann während oder nach der Entfernung des bei der Reaktion entstehenden Wassers destillativ entfernt werden.

Zur erfindungsgemäßen Herstellung veretherter Aminoplastharze werden saure Katalysatoren, im allgemeinen in Mengen von 0,01 bis 10, vorzugsweise 0,05 bis 5 Gew.%, bezogen auf Aminotriazin, wie sie oben angeführt sind, eingesetzt. Bezüglich Temperatur und Druckbereich gelten für die Herstellung der veretherten Aminoplastharze die für das Verfahren zur Herstellung nichtveretherter Produkte gemachten Angaben.

Bevorzugt ist die Verwendung eines Überschusses an Alkohol, sowie ein Temperaturbereich von 60 bis 130 °C.

Es lassen sich so veretherte Aminoplastharze herstellen, die sehr gute Verdünnbarkeiten mit organischen Lösungsmitteln, wie Ethanol, Essigester, Glykolacetat und Xylol zeigen, was sie als Lackrohstoff besonders vorteilhaft verwendbar macht. Ein weiterer Vorteil ist ihre sehr gute Verträglichkeit mit anderen Bindemitteln, wie z. B. Alkyd- und Acrylatharze (z. B. im Verhältnis 1 : 1 fest/fest).

Die erfindungsgemäßen Aminoplastharze eignen sich z. B. als Bindemittel für sich allein oder in Kombination mit anderen üblichen Lackbindemitteln.

Die in den Beispielen genannten Teile und Prozente sind, soweit nicht anders angegeben, Gewichtsteile bzw. Gewichtsprozente.

Die Herstellung der zu verwendenden β-Hydroxialdehyde kann nach DE-OS 19 57 301, DE-OS 25 07 461 und DE-AS 17 93 512 durchgeführt werden. Besonders vorteilhaft ist die in situ Herstellung der β-Hydroxialdehyde wie in der deutschen Patentanmeldung P 30 25 352.2 beschrieben.

734,7 Teile Isobutyraldehyd werden unter Rühren mit 750 Teilen 40 %igem Formaldehyd gemischt. Nachdem die Mischung auf ca. 40 °C erwärmt wurde, läßt man 25,7 Teile 40 %iges Trimethylamin zulaufen. Man läßt die Temperatur bis auf 45 °C ansteigen und kühlt dann so, daß die Temperatur nur noch langsam auf 60 °C ansteigt. Nun gibt man weitere 8,6 Teile 40 %iges Trimethylamin dazu. Die Reaktion wird nun so gesteuert, daß die Temperatur nur langsam auf 75 bis 80 °C ansteigt, die Lösung dabei aber nicht zum Sieden kommt. Anschließend wird kurz auf 90 bis 92 °C erwärmt und sofort wieder auf 65 bis 70 °C abgekühlt. Dann engt man die Reaktionslösung bei einer Innentemperatur 65 °C unter Wasserstrahlvakuum solange ein, bis die ersten Tropfen Hydroxipivalinaldehyd übergehen. Dies ist bei einer Sumpftemperatur von 90 °C, einer Siedetemperatur von 75 °C bei vollem Wasserstrahlvakuum der Fall.

Der so erhaltene β-Hydroxialdehyd wird dann mit dem Aminotriazin, Alkohol und gegebenenfalls Katalysator umgesetzt, wobei die Umsetzung sowohl im gleichen Reaktionsgefäß als auch in einem davon getrennten durchgeführt werden kann.

A. Erfindungsgemäße Herstellung nichtveretherter Aminoplastharze

Beispiele 1 bis 17

a) Das Aminotriazin wird zusammen mit dem β-Hydroxialdehyd bei einer Temperatur T (°C) Z Stunden lang unter vermindertem Druck erhitzt. Hierbei wird Wasser und nicht umgesetzter β-Hydroxialdehyd abdestilliert. Zurück bleibt ein wasserklares Harz.

b) Das Aminotriazin wird zusammen mit dem β-Hydroxialdehyd in Gegenwart eines Katalysators bei einer Temperatur T (°C) Z Stunden lang unter vermindertem Druck erhitzt. Hierbei wird Wasser und nicht umgesetzter β-Hydroxialdehyd abdestilliert. Zurück bleibt ein wasserklares Harz.

c) Das Aminotriazin wird zusammen mit dem β-Hydroxialdehyd in einem Lösungsmittel in Gegenwart eines Katalysators bei einer Temperatur T (°C) Z Stunden lang erhitzt. Hierbei wird Wasser und nicht umgesetzter β-Hydroxialdehyd ausgekreist. Zurück bleibt eine wasserklare Harzlösung im jeweils verwendeten Lösungsmittel.

(Siehe Tabelle Seite 5 f.)

Tabelle

| Nr. | Aminotriazin Art | Aminotriazin Teile | Hydroxialdehyd Art | Hydroxialdehyd Teile | Temp. T in °C | Reakt.-Zeit Z in Stunden | Katalysator Art | Katalysator Teile | Erweichungspunkt (DIN) | Löslichkeitsverhalten (Verdünnbarkeit) Alkohol | Toluol | Testbenzin | Essigester |
|---|---|---|---|---|---|---|---|---|---|---|---|---|---|
| 1 | A | 126 | a | 637,5 | 120 | 3,5 | - | - | 76,5 °C | 1:20 | 1: 1 | - | 1:20 |
| 2 | A | 126 | a | 663 | 120 | 3 | - | - | 79,5 °C | 1:20 | 1: 1 | - | 1:20 |
| 3 | A | 126 | a | 637,5 | 90<br>140 | 4<br>5 | - | - | 103,7 °C | 1:20 | 1: 5 | - | 1:20 |
| 4 | A | 126 | a | 663 | 90<br>140 | 4<br>4 | - | - | 200 °C | 1:20 | 1: 2 | - | 1:20 |
| 5 | A | 126 | a | 637,5 | 90 | 3,5 | p-Toluolsulfonsäure | 5 | 68,4 °C | 1:20 | - | - | 1:20 |
| 6 | A | 126 | a | 714 | 90 | 2,25 | " | 5 | 69,1 °C | 1:20 | 1: 3 | - | 1:20 |
| 7 | A | 126 | a | 816 | 90 | 2,33 | " | 2,5 | 41,3 °C | 1:20 | 1: 6 | - | 1:20 |
| 8 | A | 126 | a | 739,5 | 90 | 2,33 | " | 2,5 | 54,3 °C | 1:20 | 1: 3 | - | 1:20 |
| 9 | B | 187 | a | 408 | 120 | 1,58 | - | - | 60 °C | 1:20 | 1:20 | - | 1:20 |
| 10 | B | 187 | a | 612 | 120 | 1,58 | - | - | 44 °C | 1:20 | 1:20 | - | 1:20 |
| 11 | A | 94,5 | b | 543,75 | 120 | 2 | p-Toluolsulfonsäure | 3,75 | 73,7 °C | 1:20 | 1:20 | - | 1:20 |
| 12 | A | 84,2 | c | 609 | 120 | 8 | - | 3,75 | 48,4 °C | 1:20 | 1:20 | 1:1 | 1:20 |
| 13 | A | 84,2 | c | 609 | 120 | 8 | p-Toluolsulfonsäure | 3,34 | 200 °C | 1:20 | 1:20 | 1:2,5 | 1:20 |
| 14 | B | 187 | b | 464 | 120 | 1,5 | - | - | 68 °C | 1:20 | 1:20 | - | 1:20 |
| 15 | B | 187 | b | 580 | 120 | 1,5 | - | - | 48 °C | 1:20 | 1:20 | - | 1:20 |
| 16 | A | 94,5 | b | 543,75 | 120 | 2 | - | - | 49 °C | 1:20 | 1:20 | - | 1:20 |
| 17 | A | 84,2 | b | 543,75 | 120 | 2 | p-Toluolsulfonsäure | 3,34 | 58,1 °C | 1:20 | 1:20 | - | 1:20 |

Triazine : A ≙ Melamin
B ≙ Benzoguanamin

Aldehyde : a ≙ β-Hydroxipivaldehyd
b ≙ 2-Hydroximethyl-2-methyl-butanal
c ≙ 2-Hydroximethyl-2-methyl-pentanal

B. Erfindungsgemäße Herstellung veretherter Aminoplastharze

Beispiel 18

306 Teile (3 Mol) Hydroxipivalaldehyd, 126 Teile (1 Mol) Melamin, 988 Teile (31 Mol) Methanol und 2,5 Teile p-Toluolsulfonsäure werden unter Rühren 5 Stunden zum Rückfluß erhitzt. Nach dem Abkühlen wird nichtumgesetztes Melamin abfiltriert, die Harzlösung mit ca. 7 Teilen 25 %iger Natronlauge neutralisiert und bei 100 mbar Absolutdruck durch Erhitzen bis auf 120 °C überschüssiger Alkohol und Aldehyd abdestilliert. Das hochviskose Umsetzungsprodukt wird mit ca. 60 Teilen Ethanol auf eine Viskosität von 2 000 mPas/30 °C eingestellt. Man erhält 385 Teile einer 60 %igen Harzlösung.

Löslichkeiten :

| | |
|---|---|
| Ethanol | 1 : ∞ |
| Butanol | 1 : ∞ |
| Essigester | 1 : ∞ |
| Ethylenglykol | 1 : ∞ |
| Terpentinöl | 1 : 28 |
| Xylol | 1 : 16 |

Vergleichsbeispiel 1 (nach DE-OS 21 05 783/Beispiel 1)

252 Teile (2 Mol) Melamin, 432 Teile (6 Mol) Isobutyraldehyd, 988 Teile (31 Mol) Methanol und 5 Teile p-Toluolsulfonsäure werden unter Rühren 5 Stunden zum Rückfluß erhitzt. Nach dem Abkühlen wird bei Raumtemperatur filtriert und der Rückstand bei 60 °C im Vakuumtrockenschrank getrocknet. Man erhält 544 Teile eines weißen Pulvers, Fp. 229 °C.

Löslichkeiten :

| | |
|---|---|
| Ethanol, Butanol, Essigester | 1 : 0,5 |
| Ethylenglykol | 1 : 10 |
| Terpentinöl, Xylol | 1 : 0,5 |

Beispiel 19

1 070 Teile (10,5 Mol) Hydroxipivalaldehyd, 1 400 Teile (18,9 Mol) n-Butanol, 106 Teile (0,84 Mol) Melamin und 2,5 Teile p-Toluolsulfonsäure werden 3 Stunden wie in Beispiel 18 umgesetzt. Nach dem Verdünnen mit 60 Teilen Ethanol erhält man 930 Teile einer 75 %igen Harzlösung.

Löslichkeiten :

| | |
|---|---|
| Ethanol | 1 : ∞ |
| Butanol | 1 : ∞ |
| Essigester | 1 : 0,5 |
| Ethylenglykol | 1 : ∞ |
| Terpentinöl | 1 : 1,5 |
| Xylol | 1 : 0,5 |

Vergleichsbeispiel 2 (nach DE-OS 27 37 984/Tabelle 1)

126 Teile Melamin, 900 Teile (12,5 Mol) n-Butyraldehyd, 1 460 Teile (20 Mol) n-Butanol, 3 Teile p-Toluolsulfonsäure werden 2 Stunden zum Rückfluß erhitzt und wie oben aufgearbeitet. Man erhält 150 Teile eines weißen Pulvers. Fp. 183 °C.

Löslichkeiten :

| | |
|---|---|
| Ethanol, Butanol, Essigester | < 1 : 0,5 |
| Ethylenglykol ca. | 1 : 10 |
| Terpentinöl, Xylol | < 1 : 0,5 |

Beispiel 20

189 Teile (1,5 Mol) Melamin, 612 Teile (6 Mol) Hydroxipivalaldehyd, 750 Teile (10 Mol) n-Butanol und

7,5 Teile p-Toluolsulfonsäure werden 5 Stunden zum Rückfluß erhitzt und wie in Beispiel 18 angegeben aufgearbeitet. Nach dem Verdünnen mit 400 Teilen n-Butanol erhält man 1 070 Teile einer 55 %igen Lösung.

Löslichkeiten :

| | |
|---|---|
| Ethanol | 1 : ∞ |
| Butanol | 1 : ∞ |
| Essigester | 1 : ∞ |
| Ethylenglykol | 1 : ∞ |
| Terpentinöl | 1 : 20 |
| Xylol | 1 : 12 |

Vergleichsbeispiel 3 (nach DE-OS 21 05 783/Beispiel 4)

252 Teile (2 Mol) Melamin, 576 Teile (8 Mol) i-Butyraldehyd, 986 Teile (13,5 Mol) n-Butanol und 5 Teile Sulfaminsäure werden 5 Stunden wie im Vergleichsbeispiel 1 umgesetzt und aufgearbeitet. Ausbeute : 540 Teile ; Fp. 229 °C.

Löslichkeiten :

| | |
|---|---|
| Ethanol, Butanol, Essigester | < 1 : 0,5 |
| Ethylenglykol | 1 : 8 |
| Terpentinöl, Xylol | < 1 : 0,5 |

Beispiel 21

281 Teile (1,5 Mol) Benzoguanamin, 612 Teile (6 Mol) Hydroxipivalaldehyd, 864 Teile (27 Mol) Methanol und 3,8 Teile p-Toluolsulfonsäure werden 2 Stunden zum Rückfluß erhitzt und wie oben aufgearbeitet. Nach Zusatz von 160 Teilen Ethanol erhält man 1 100 Teile einer 70 %igen Lösung.

Löslichkeiten :

| | |
|---|---|
| Ethanol | 1 : ∞ |
| Butanol | 1 : ∞ |
| Essigester | 1 : ∞ |
| Ethylenglykol | 1 : ∞ |
| Terpentinöl | 1 : 4 |
| Xylol | 1 : 2 |

**Patentansprüche**

1. Verfahren zur Herstellung von veretherten oder nichtveretherten Aminoplastharzen auf Basis von Umsetzungsprodukten aus Aminotriazinen und Aldehyden, dadurch gekennzeichnet, daß Aminotriazine der allgemeinen Formel (I)

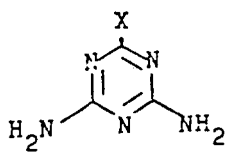

(I)

worin X für Wasserstoff, einen Alkylrest mit 1 bis 15 Kohlenstoffatomen, einen Phenylrest, einen Alkylphenylrest mit 1 bis 4 Kohlenstoffatomen im Alkylrest oder für den Rest —$NH_2$ steht, mit 0,1 bis 3 Mol pro Mol acidem Wasserstoff des Aminotriazins eines β-Hydroxialdehydes der allgemeinen Formel (II)

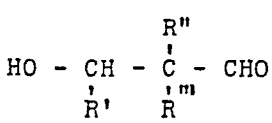

(II)

worin R′, R″ und R‴ untereinander gleich oder verschieden sind und für Wasserstoff oder eine Alkylgruppe mit 1 bis 5 Kohlenstoffatomen stehen oder R″ bzw. R‴ zusammen mit dem α-Kohlenstoffatom einen Cyclopentan- oder Cyclohexanring bilden sowie R″ und/oder R‴ außerdem für

einen Hydroxialkylrest mit 1 bis 4 Kohlenstoffatomen und R″ für einen Phenylrest stehen können, bei Temperaturen zwischen 60 und 200 °C umgesetzt werden und das dabei entstehende Wasser gegebenenfalls zumindest teilweise entfernt wird, wobei im Falle der Herstellung der veretherten Aminoplastharze die Umsetzung in Gegenwart mindestens eines Alkohols und eines sauren Katalysators, im Falle der Herstellung der nichtveretherten Aminoplastharze die Umsetzung in Gegenwart oder Abwesenheit eines sauren Katalysators durchgeführt wird.

2. Verfahren nach Anspruch 1, dadurch gekennzeichnet, daß zur Herstellung der veretherten Aminoplastharze als Alkohol ein Mono- und/oder Polyalkohol in einer Menge von 0,1 bis 30 Mol, bezogen auf Aminotriazin verwendet wird.

3. Verfahren nach Anspruch 2, dadurch gekennzeichnet, daß als Alkohol ein Mono- und/oder Polyalkohol in einer Menge von 3 bis 15 Mol, bezogen auf Aminotriazin, eingesetzt wird.

4. Verfahren nach einem der vorhergehenden Ansprüche, dadurch gekennzeichnet, daß zur Herstellung der veretherten Aminoplastharze saure Katalysatoren in Mengen von 0,01 bis 10 Gew.%, bezogen auf Aminotriazin, eingesetzt werden.

5. Verwendung der nach einem Verfahren gemäß einem der vorhergehenden Ansprüche hergestellten Aminoplastharze als Lackrohstoffe.

**Claims**

1. A process for the preparation of etherified or non-etherified aminoplast resins which are based on reaction products of aminotriazines and aldehydes, wherein an aminotriazine of the general formula (I)

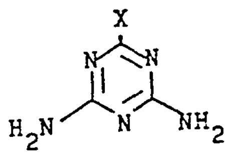
(I)

where X is hydrogen, alkyl of 1 to 15 carbon atoms, phenyl, alkylphenyl, where alkyl is of 1 to 4 carbon atoms, or $-NH_2$, is reacted with from 0.1 to 3 moles, per mole of acidic hydrogen on the aminotriazine, of a β-hydroxyaldehyde of the general formula (II)

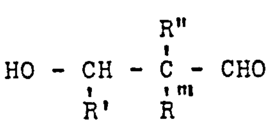
(II)

where R′, R″ and R‴ are identical or different and each is hydrogen or alkyl of 1 to 5 carbon atoms, or R″ and R‴, together with the α-carbon atom, are a cyclopentane or cyclohexane ring, and R″ and/or R‴ can also be hydroxyalkyl of 1 to 4 carbon atoms and R″ can be phenyl, at from 60 to 200 °C and some or all of the water thereby formed may be removed, the reaction being carried out in the presence of at least one alcohol and an acid catalyst for the preparation of etherified aminoplast resins, and in the presence or absence of an acid catalyst for the preparation of non-etherified aminoplast resins.

2. A process as claimed in claim 1, wherein, for the preparation of etherified aminoplast resins, a monoalcohol, a polyalcohol or a mixture thereof is used as the alcohol in an amount of from 0.1 to 30 moles per mole of aminotriazine.

3. A process as claimed in claim 2, wherein a monoalcohol, a polyalcohol or a mixture thereof is used as the alcohol in an amount of from 3 to 15 moles per mole of aminotriazine.

4. A process as claimed in any of the preceding claims, wherein from 0.01 to 10 % by weight, based on the aminotriazine, of an acid catalyst is used for the preparation of etherified aminoplast resins.

5. The use of the aminoplast resins, prepared by a process as claimed in any of the preceding claims, as surface coatings raw materials.

**Revendications**

1. Procédé de préparation de résines aminoplastes éthérifiées ou non à base de produits de la réaction d'amino-triazines et d'aldéhydes, caractérisé en ce que l'on fait réagir des amino-triazines de la formule générale (I)

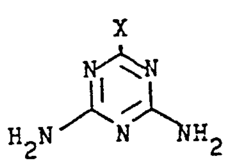
(I)

dans laquelle X désigne un atome d'hydrogène, un radical alkyle en $C_1$ à $C_{15}$, un groupe phényle, un groupe alkyl (en $C_1$ à $C_4$)-phényle ou un groupe $-NH_2$, à des températures comprises entre 60 et 200 °C, avec 0,1 à 3 moles par mole d'hydrogène acide de l'amino-triazine d'un β-hydroxyaldéhyde de la formule générale (II)

$$HO - \underset{R'}{CH} - \overset{R''}{\underset{R'''}{C}} - CHO \qquad (II)$$

dans laquelle R', R'' et R''', qui peuvent être identiques ou différents, désignent chacun un atome d'hydrogène ou un radical alkyle en $C_1$ à $C_5$ ou R'' ou R''' forme avec l'atome de carbone α un noyau cyclopentane ou cyclohexane, R'' et (ou) R''' pouvant de plus représenter un groupe hydroxyalkyle en $C_1$ à $C_4$ et R'' un groupe phényle, l'eau formée pendant cette réaction pouvant éventuellement être éliminée au moins partiellement, la réaction étant réalisée en présence d'au moins un alcool et d'un catalyseur acide, si des résines aminoplastes éthérifiées sont préparées, et en présence ou non d'un catalyseur acide dans le cas de la préparation de résines aminoplastes non éthérifiées.

2. Procédé suivant la revendication 1, caractérisé en ce que, pour la préparation de résines aminoplastes éthérifiées, on emploie un monol et(ou) un polyol en une proportion de 0,1 à 30 moles par rapport à l'amino-triazine.

3. Procédé suivant la revendication 2, caractérisé en ce que l'on emploie un monol et(ou) un polyol en une proportion de 3 à 15 moles par rapport à l'amino-triazine.

4. Procédé suivant l'une des revendications précédentes, caractérisé en ce que la préparation de résines aminoplastes éthérifiées est réalisée en présence de 0,01 à 10 % en poids par rapport à l'amino-triazine de catalyseurs acides.

5. Utilisation des résines aminoplastes préparées par le procédé suivant l'une des revendications précédentes comme matières premières pour la production de vernis.